# EUROPÄISCHE PATENTANMELDUNG

(11) **EP 4 813 589 A1**
(43) Veröffentlichungstag der Anmeldung: **30.09.2026**
(21) Anmeldenummer: 26165286.1
(22) Anmeldetag: 17.03.2026
(51) Int. Cl.: B25J 19/00, B25J 9/10, B25J 17/00

(54) **ANTRIEBSVORRICHTUNG FÜR EIN GELENK EINES ROBOTERARMS, ZUGEHÖRIGER ROBOTERARM UND ENTSPRECHENDE DREHDURCHFÜHRUNG**

(30) Priorität: 25.03.2025 DE 102025111500
(71) Anmelder: KUKA Deutschland GmbH, 86165 Augsburg (DE)
(72) Erfinder: REEKERS, Andre, 86163 Augsburg (DE)
(74) Vertreter: Dorow, Florian

(57) **Zusammenfassung**

Die Erfindung betrifft eine Antriebsvorrichtung (4) für ein Gelenk (L) eines Roboterarms (3), aufweisend einen mit einem Führungsrohrendabschnitt (18) eines Kabelführungsrohres (17) verbundenen Mitnehmer (19), der einen mit dem Führungsrohrendabschnitt (18) verbundenen Nabenabschnitt (19a), einen radial nach außen versetzten Kabelführungsabschnitt (19b) und einen den Nabenabschnitt (19a) mit dem Kabelführungsabschnitt (19b) verbindenden Verbindungsabschnitt (19c) aufweist, und aufweisend einen koaxial zu einem Motor (9) angeordneten Ringraum (R), der ausgebildet ist zur Aufnahme einer Kabelschlaufe (7c) eines in den Ringraum (R) eingelegten Kabels (7), wobei der Ringraum (R) eine Öffnung (20) aufweist, über die das Kabel (7) in den Ringraum (R) zuführbar ist, wobei der Kabelführungsabschnitt (19b) des Mitnehmers (19) ausgebildet ist, in einem eingelegten Zustand eines Kabels (7), in dem das Kabel (7) axial von dem getriebeseitigen Rohrende (17a) zum motorrückseitigen Rohrende (17b) durch das Kabelführungsrohr (17) hindurchgeführt und radial an den Kabelführungsabschnitt (19b) geführt ist, das Kabel (7) bei einer Drehung eines Getriebe-Ausgangsglieds (15) der Antriebsvorrichtung (4) in einem Übergangsabschnitt (7c) des Kabels (7) in die Öffnung (20) des Ringraumes (R) hinein mitzunehmen, derart, dass das Kabel (7) an einer der momentanen Drehstellung des Getriebe-Ausgangsglieds (15) entsprechenden Umfangsstelle in den Ringraum (R) hineingeführt wird. Die Erfindung betrifft außerdem einen zugehörigen Roboterarm (3) und eine entsprechende Drehdurchführung.

## Beschreibung

Die Erfindung betrifft eine Antriebsvorrichtung für ein Gelenk eines Roboterarms, aufweisend einen Motor mit einem Motorgehäuse und einer im Motorgehäuse drehbar gelagerten hohlen Motorwelle, ein koaxial zur Motorwelle angeordnetes Getriebe, das ein an die Motorwelle angekoppeltes hohles Getriebe-Eingangsglied, ein hohles Getriebe-Ausgangsglied, sowie ein das Getriebe-Eingangsglied mit dem Getriebe-Ausgangsglied koppelndes Abstütz-Glied aufweist, und ein mit dem Getriebe-Ausgangsglied verbundenes Kabelführungsrohr, welches sich von seinem getriebeseitigen Rohrende ausgehend vom Getriebe-Ausgangsglied axial durch die hohle Motorwelle hindurch bis zu seinem dem Getriebe axial gegenüberliegenden motorrückseitigen Rohrende des Motorgehäuses erstreckt und dort einen Führungsrohrendabschnitt bildet. Die Erfindung betrifft außerdem einen zugehörigen Roboterarm und eine entsprechende Drehdurchführung.

Die CN 10 77 18 036 A beschreibt ein hohles, integriertes Doppel-Feedback-Getriebe umfassend einen rahmenlosen Motor, eine Bremse, einen Inkrementalgeber, einen Absolutwertgeber, eine Hochgeschwindigkeits-Motorwelle, eine Niedriggeschwindigkeits-Hohlwelle, einen Abtriebsflansch, ein Motorwellenlager und ein Hohlwellenlager, einen Antrieb, ein Gehäuse, einen ersten Lagerständer, einen zweiten Lagerständer, einen dritten Lagerständer, sowie ein Verbindungskabel und eine Übergangswelle, wobei ein Motorrotor, der Inkrementalgeber und die Bremse auf der Hochgeschwindigkeitsmotorwelle installiert sind und der Absolutwertgeber auf der Niedriggeschwindigkeits-Hohlwelle installiert ist. Aufgrund der doppelten Rückkopplung an dem kompakten Hochpräzisions-Hohlgelenk ist die Steuergenauigkeit hoch, wobei die Gelenke hohl ausgebildet sind, um eine Verkabelung zu ermöglichen.

Aufgabe der Erfindung ist es, eine Antriebsvorrichtung mit einer hohlen Motorwelle und einem hohlen Getriebe-Ausgangsglied zu schaffen, bei der ein durch die hohle Motorwelle und das hohle Getriebe-Ausgangsglied zu führendes Kabel besonders verschleißgeschützt verlegt werden kann. Weitere Aufgaben sind die Schaffung eines Roboterarms mit wenigstens einer entsprechenden Antriebsvorrichtung und/oder einer entsprechenden Drehdurchführung für wenigstens ein Gelenk eines Roboterarms.

Die Aufgabe wird gelöst durch eine Antriebsvorrichtung für ein Gelenk eines Roboterarms, aufweisend:
- einen Motor mit einem Motorgehäuse und einer im Motorgehäuse drehbar gelagerten hohlen Motorwelle,
- ein koaxial zur Motorwelle angeordnetes Getriebe, das ein an die Motorwelle angekoppeltes hohles Getriebe-Eingangsglied, ein hohles Getriebe-Ausgangsglied, sowie ein das Getriebe-Eingangsglied mit dem Getriebe-Ausgangsglied koppelndes Abstütz-Glied aufweist,
- ein mit dem Getriebe-Ausgangsglied verbundenes Kabelführungsrohr, welches sich von seinem getriebeseitigen Rohrende ausgehend vom Getriebe-Ausgangsglied axial durch die hohle Motorwelle hindurch bis zu seinem dem Getriebe axial gegenüberliegenden motorrückseitigen Rohrende des Motorgehäuses erstreckt und dort einen Führungsrohrendabschnitt bildet,
- einen mit dem Führungsrohrendabschnitt des Kabelführungsrohres verbundenen Mitnehmer, der einen mit dem Führungsrohrendabschnitt verbundenen Nabenabschnitt, einen radial nach außen versetzten Kabelführungsabschnitt und einen den Nabenabschnitt mit dem Kabelführungsabschnitt verbindenden Verbindungsabschnitt aufweist,
- einen koaxial zum Motor angeordneten Ringraum, der ausgebildet ist zur Aufnahme einer Kabelschlaufe eines in den Ringraum eingelegten Kabels, wobei der Ringraum eine Öffnung aufweist, über die das Kabel in den Ringraum zuführbar ist, wobei der Kabelführungsabschnitt des Mitnehmers ausgebildet ist, in einem eingelegten Zustand eines Kabels, in dem das Kabel axial von dem getriebeseitigen Rohrende zum motorrückseitigen Rohrende durch das Kabelführungsrohr hindurchgeführt und radial an den Kabelführungsabschnitt geführt ist, das Kabel bei einer Drehung des Getriebe-Ausgangsglieds in einem Übergangsabschnitt des Kabels in die Öffnung des Ringraumes hinein mitzunehmen, derart, dass das Kabel an einer der momentanen Drehstellung des Getriebe-Ausgangsglieds entsprechenden Umfangsstelle in den Ringraum hineingeführt wird.

Eine Antriebsvorrichtung mit einer hohlen Motorwelle und einem hohlen Getriebe-Ausgangsglied, um ein Kabel durch die hohle Motorwelle und das hohle Getriebe-Ausgangsglied führen zu können, ist insbesondere an Roboterarmen zweckmäßig. So kann ein Kabel im Inneren des Roboterarms verlegt werden und es erübrigt sich eine außenseitige Verlegung des Kabels, welche hinsichtlich der Störkontur des Roboterarms nachteilig wäre.

Ein Kabel kann ein Einzelkabel sein oder mehrere separate Leitungen umfassen, die beispielsweise zu einem Leitungsbündel zusammengefasst sein können. Ist es nun vorgesehen, dass ein Kabel durch eine hohle Motorwelle hindurchgeführt werden soll, und insbesondere im Falle eines Roboterarms, in dem das Kabel von einem Glied des Roboterarms in ein unmittelbar benachbartes Glied geführt werden soll, kann eine Torsionsbelastung, die auf das Kabel wirkt, nachteilig sein und insbesondere die Lebensdauer des Kabels verkürzen, da übermäßige Torsionsbeanspruchungen zu unerwünschten Leitungsbrüchen führen können.

Gewisse Torsionsbeanspruchungen sind zwar von Herstellern von Kabeln berücksichtigt und dürfen in einem vorgegebenem Umfang auf das Kabel einwirken, ohne dass es innerhalb der vorbestimmten Betriebsdauer des Kabels zu schädlichen Leitungsbrüchen kommt. Allerdings geben die Hersteller dabei unter anderem einzuhaltende Mindestlängen für einen Kabelabschnitt vor, der auch nur mit einem begrenzten Torsionswinkel beaufschlagt werden darf.

Speziell in Roboterarmen ist der Bauraum jedoch klein und durch hohle Motorwellen hindurch geführt Kabel müssen Torsionen, die aufgrund einer relativen Drehbewegung zweier unmittelbar benachbarter Glieder eines Drehgelenks des Roboterarms auftreten, im erforderlichen Maße kompensiert werden. Dabei besteht oft ein limitierender Aspekt darin, dass eine hohle Motorwelle nicht über ihren vollständigen Querschnitt hinweg mit Kabeln belegt werden darf, sondern ein gewisser freier Platz weiterhin zur Verfügung stehen muss, damit das Kabel während einer Torsionsbelastung entsprechend radial ausweichen kann, um die Torsionsspannungen abzubauen. Dahingehend geben Hersteller von Kabeln auch einen maximalen Befüllungsgrad an, der das Verhältnis von mit Kabeln belegtem Querschnitt zu unbelegtem Querschnitt in der hohlen Motorwelle bestimmt.

Üblicherweise sind Getriebe, insbesondere Getriebe in Roboterarmen, mit einer Übersetzung ins Langsame ausgebildet, so dass die an das Getriebe-Eingangsglied angeschlossene Motorwelle entsprechend schneller dreht als das hohle Getriebe-Ausgangsglied.

Bei der erfindungsgemäßen Antriebsvorrichtung ist daher das Kabelführungsrohr mit dem hohlen Getriebe-Ausgangsglied verbunden, so dass auch das Kabelführungsrohr die langsamere Drehgeschwindigkeit aufweist. Da insbesondere im Falle eines Roboterarms das Getriebe-Ausgangsglied mit einem Glied des Roboterarms verbunden ist, führt das Getriebe-Ausgangsglied relativ zu diesem Glied des Roboterarms keine Drehbewegung aus. Ein beispielsweise an diesem Glied festgelegtes Kabel führt daher auch keine relative Bewegung zu diesem Glied des Roboterarms aus.

Um nun zu erreichen, dass das Kabel entlang seiner innerhalb des Kabelführungsrohres verlegten Kabelabschnittslänge überhaupt keiner Torsionsbelastung ausgesetzt ist und insbesondere auch keinerlei Torsionsbewegung ausführt, ist das Kabelführungsrohr vollständig durch die hohle Motorwelle hindurch geführt, und zwar an ein dem Getriebe-Ausgangsglied gegenüberliegendes Ende der Antriebsvorrichtung, wo das Kabel aus dem Kabelführungsrohr heraustritt und dann radial weggeführt wird. Dazu ist am Führungsrohrendabschnitt des Kabelführungsrohres ein Mitnehmer vorgesehen, welcher das Kabel im Bereich seines Kabelradialabschnitts führt und an einem Kabelführungsabschnitt des Mitnehmers derart führt, dass das Kabel im Bereich seines Kabelradialabschnitts synchron zur Rotation des Getriebe-Ausgangsglieds und somit synchron zum Kabelführungsrohr mitgedreht wird, so dass eine Torsion des Kabels unterbunden ist, d.h. nicht auftreten kann, da das Kabel die Rotation des Getriebe-Ausgangsglieds und des Kabelführungsrohrs stets in gleicher Weise mit ausführt.

Die Anpassung der relativen Verdrehung des einen Kabelendes bezüglich des anderen Kabelendes, bzw. des Getriebe-Ausgangsglieds bezüglich des Motorgehäuses oder eines mit dem Motorgehäuse verbundenen Bauteil, wird bei der erfindungsgemäßen Antriebsvorrichtung in einen Ringraum verlegt, in dem das Kabel zumindest weitegehend auch keine Torsion ausführt, sondern entlang einer Kabelschlaufe lediglich eine Biegebewegung ausführt bzw. einer Biegebeanspruchung unterliegt.

Der Ringraum erstreck sich dabei koaxial zum Motorgehäuse. Ein jenseits des Mitnehmers aus dem Ringraum wieder hinausführender Kabelabschnitt kann demgemäß an dem Motorgehäuse oder einem mit dem Motorgehäuse verbunden Bauteil, insbesondere an einem mit dem Motorgehäuse verbundenen, am Drehgelenk benachbarten Glied des Roboterarms festgelegt sein.

Der Mitnehmer ist fest mit dem Kabelführungsrohr verbunden, so dass der Mitnehmer dieselbe Drehbewegung ausführt wie das das Kabelführungsrohr und das mit dem Kabelführungsrohr verbundene Getriebe-Ausgangsglied. Insoweit kann es auch zu keiner verschleißverursachenden Relativbewegung zwischen dem Kabel und der Innenwand des Kabelführungsrohres kommen. Dies hat den weiteren Vorteil, dass der Befüllungsgrad des Kabelführungsrohres erhöht werden kann, und somit ein dickeres Kabel oder ein Kabelbündel mit größerem Durchmesser durch die hohe Motorwelle hindurchgeführt werden kann als dies bisher möglich war.

Der Ringraum kann eine das Motorgehäuse umfangsseitig einfassende Ringrauminnenwand und eine in einem radialen Abstand von der Ringrauminnenwand angeordnete, die Ringrauminnenwand umfangsseitig umgebende Ringraumaußenwand aufweisen, wobei zwischen der Ringrauminnenwand und der Ringraumaußenwand ein Lagerraum für eine Kabelschlaufe eines durch den Ringraum geleiteten Kabels gebildet wird und die Öffnung des Ringraums auf demselben Umfang liegt wie der Kabelführungsabschnitt des Mitnehmers.

Die Ringrauminnenwand stützt eine im Ringraum verlaufende Kabelschlaufe eines eingelegten Kabel von radial innen ab. Die Ringraumaußenwand stützt die im Ringraum verlaufende Kabelschlaufe eines eingelegten Kabel von radial außen ab. Der Lagerraum ist insoweit ein kreiszylindrischer Ringraum. Der Ringraum kann wenigstens an einer seiner beiden Stirnseiten die Öffnung aufweist, über die der von dem Mitnehmer geführte Übergangsabschnitt des Kabels in den Ringraum hineingeleitet wird. Die Öffnung kann insoweit einer kreisringförmige Öffnung sein. Die Öffnung kann sich koaxial um das Motorgehäuse erstrecken. Die Öffnung kann dabei eine radiale Öffnungsweite aufweisen, die lediglich geringfügig größer ist als der Durchmesser des Kabels.

Der Ringraum bzw. der Lagerraum für die Kabelschlaufe kann somit eine Kabeltonne bilden. Diese muss nicht notwendigerweise auf derselben axialen Höhe liegen wie der Motor der Antriebsvorrichtung. Der Ringraum kann daher auch axial versetzt zum Motor angeordnet sein.

Speziell bei Bauarten von Antriebsvorrichtungen bei denen der Motor im Vergleich zum Getriebe einen deutlich kleineren Durchmesser aufweist und somit das Getriebe im Vergleich zum Motor den deutlich größeren Durchmesser aufweist, kann es jedoch besonders zweckmäßig sein, wenn der Ringraum auf derselben axialen Höhe wie der Motor angeordnet ist. Insoweit kann der Ringraum den Motor umfangsseitig umgeben. Der Ringraum bzw. der Lagerraum für die Kabelschlaufe kann insbesondere eine radiale Bauhöhe aufweisen, die geringen ist als die halbe Durchmesserdifferenz zwischen dem Durchmesser des Motors und dem Durchmesser des Getriebes. Folglich kann der Ringraum bzw. der Lagerraum für die Kabelschlaufe einen Außendurchmesser aufweisen, der zumindest geringfügig kleiner ist als der Außendurchmesser des Getriebes. Somit kann trotz eines zusätzlichen Ringraums für die Kabelschlaufe eine besonders kompakte Bauweise für die Antriebsvorrichtung realisiert werden.

Der Verbindungsabschnitt des Mitnehmers kann von einem sich radial von dem Nabenabschnitt zu dem Kabelführungsabschnitt erstreckenden Hebel gebildet werden.

Der Mitnehmer muss somit nicht notwendigerweise als eine Kreisscheibe ausgebildet sein. Der Verbindungsabschnitt kann daher auch stabförmig gestaltet sein und stellt funktional in seiner Grundform lediglich eine starre Verbindung des Nabenabschnitts zu dem Kabelführungsabschnitt bereit, so dass die Drehstellung des Nabenabschnitts positionsgenau auf die Drehstellung des Kabelführungsabschnitts übertragen wird. Der Verbindungsabschnitt kann jedoch neben der Funktion als ein den Nabenabschnitt mit dem Kabelführungsabschnitt verbindender Hebel zusätzliche Funktionen beinhalten.

Der Verbindungsabschnitt des Mitnehmers kann alternativ zu einem Hebel von einer sich radial von dem Nabenabschnitt zu dem Kabelführungsabschnitt erstreckenden Ringscheibe oder einem Ringscheibensegment gebildet werden.

Ist der Mitnehmer als eine Ringscheibe ausgebildet, so deckt die Ringscheibe die rückseitige Stirnseite des Motors bzw. der gesamten Antriebsvorrichtung ab und kann somit zusätzlich als eine Schutzkappe dienen, die beispielsweise Staub fernhalten kann und ein unerwünschtes Eingreifen in die Antriebsvorrichtung verhindert. Darüber hinaus kann die dem Motor zugewandte Innenwand der Ringscheibe eine seitliche Führungsfläche für die im Ringraum vorhandene Kabelschlaufe bilden. Die Ringscheibe deckt insoweit die Öffnung des Ringraums mit Ausnahme des Bereichs des Kabelführungsabschnitts weitgehend vollständig ab.

Auch im Falle eines als Ringscheibensegment ausgebildeten Mitnehmers kann die dem Motor zugewandte Innenwand des Ringscheibensegment eine seitliche Führungsfläche für die im Ringraum vorhandene Kabelschlaufe bilden. Der Ausdehnungswinkel des Ringscheibensegments kann an die maximale Drehwinkeldifferenz zwischen Motorgehäuse und Getriebe-Ausgangsglied angepasst sein.

Der Mitnehmer kann insbesondere topfförmig ausgebildet sein, wobei der als Ringscheibe ausgebildete Verbindungsabschnitt von einer Topfbodenfläche des topfförmigen Mitnehmers gebildet wird und wenigstens eine Topfmantelfläche des topfförmigen Mitnehmers axial zumindest abschnittsweise oder vollständig die Ringraumaußenwand und/oder die Ringrauminnenwand des Ringraums bildet.

In dieser abgewandelten Ausführungsform bildet der Mitnehmer somit auch einen Teil des Ringraums, d.h. einen Teil der Ringraumaußenwand und/oder der Ringrauminnenwand. Die Topfmantelfläche des topfförmigen Mitnehmers kann sich insbesondere über die halbe axiale Breite des Ringraums erstrecken. Demgemäß kann die dem Mitnehmer zugewandte Hälfte der Kabelschlaufe von einer Topfmantelfläche überdeckt oder zwischen zwei koaxial zueinander beabstandet angeordneten Topfmantelflächen des topfförmigen Mitnehmers eingeschlossen sein. Die von einer inneren Topfmantelfläche gebildete Ringrauminnenwand ist dabei zumindest in einen geringfügigen Abstand zum Motorgehäuse zu lagern. Somit kann die von der inneren Topfmantelfläche gebildete Ringrauminnenwand eine relative Bewegung zum Motorgehäuse ausführen. Die inneren Topfmantelfläche ist in dieser Ausführungsvariante dann auch kein Teil des Motorgehäuses.

Eine dem Ringraum zugewandte Innenwand des als Ringscheibe oder Ringscheibensegment ausgebildeten Verbindungsabschnitts des Mitnehmers kann eine axiale Ringstirnwand des Ringraums bzw. einen Umfangsteilabschnitt der axialen Ringstirnwand des Ringraums bilden, an der eine in dem Ringraum ausgebildete Kabelschlaufe axial geführt ist.

Die Innenwand verhindert insoweit ein Austreten der Kabelschlaufe aus dem Ringraum. Aufgrund der Biegespannungen in dem Biegungsabschnitt der Kabelschlaufe besteht die Tendenz, dass die Schenkel der Kabelschlaufe axial nach außen herausgedrängt werden. Ein solches Herausdrängen wird durch die Innenwand des Verbindungsabschnitts des Mitnehmers verhindert.

Der Kabelführungsabschnitt kann eine radial ausgerichtete, in Drehrichtung des Mitnehmers voreilende Führungswand und eine radial ausgerichtete, in Drehrichtung des Mitnehmers nacheilende Führungswand aufweisen, wobei die beiden Führungswände derart beabstandet zueinander angeordnet sind, dass ein eingelegtes Kabel von zwei gegenüberliegende Seiten geführt ist.

Der Kabelführungsabschnitt kann somit durch eine randoffene Aussparung in dem Mitnehmer, insbesondere in einem als Ringscheibe oder als Ringscheibensegment ausgebildeten Mitnehmer, gebildet werden. Die Aussparung kann eine axiale Spaltbreite aufweisen, die an den Durchmesser des zu führenden Kabels angepasst ist. Die axiale Spaltbreite der Aussparung kann demgemäß geringfügig größer sein als der Durchmesser des zu führenden Kabels. Ein gewisses Spiel zwischen der Aussparung und dem eingelegten Kabel ist dabei unschädlich.

Jeweils einer der beiden Führungswände dient dabei je nach Drehrichtung als Mitnehmerkante, um das Kabel gemäß der Drehwinkelstellung des Getriebe-Abtriebsglieds bzw. der Drehwinkelstellung des Führungsrohes mitzudrehen, d.h. mitzuführen. Der Kabelradialabschnitt des Kabels kann gegebenenfalls an der äußeren Seitenwand des Mitnehmers festgelegt sein.

Die Antriebsvorrichtung kann ein in das Kabelführungsrohr eingelegtes Kabel aufweisen, das an dem Getriebe-Ausgangsglied oder an einem mit dem Getriebe-Ausgangsglied verbundenen Bauteil befestigt ist, und das an dem motorrückseitigen Rohrende axial aus dem Kabelführungsrohr herausgeführt und in radialer Richtung zum Kabelführungsabschnitt geführt ist, wo es in den Ringraum eintritt und darin eine Kabelschlaufe bildet.

Die Antriebsvorrichtung als solches kann auch ohne eingelegtes Kabel eine Vorrichtung sein, die beispielsweise als ein Ersatzteil oder Zulieferteil hergestellt und angeboten werden kann. Die Antriebsvorrichtung kann aber auch als Bausatz ausgebildet sein, bei dem die Antriebsvorrichtung bereits mit einem eingelegten Kabel ausgestattet ist. Bei mehreren Antriebsvorrichtungen, die beispielsweise in einem Roboterarm zu montieren sind, kann jede der mehreren Antriebsvorrichtungen ein Kabelstück aufweisen, das beispielsweise an beiden Kabelenden mit elektrischen Steckern, Buchsen oder Kupplungen versehen sein kann. Jeweils eine Antriebsvorrichtung kann dann zusammen ihrem zugeordneten Kabelstück montiert werden und anschließend die mehreren Kabelstücke mittels ihrer elektrischen Steckern, Buchsen oder Kupplungen elektrisch verbunden werden. Alternativ kann aber auch vorgesehen sein, dass ein einziges Kabel oder ein einziges Kabelbündel durch mehrere Antriebsvorrichtungen hindurchgeschleift wird.

Die Aufgabe wird auch gelöst durch einen Roboterarm mit mehreren Gliedern und die Glieder gegeneinander verstellbar verbindenden Gelenken, wobei wenigstens eines der Gelenke eine Antriebsvorrichtung nach einem der beschriebenen Ausführungsformen aufweist.

Das die Antriebsvorrichtung nach einem der beschriebenen Ausführungsformen aufweisende Gelenk des Roboterarms kann ein hohles erstes Glied und ein mit dem hohlen ersten Glied unmittelbar drehbar verbundenes zweites Glied aufweisen, wobei Bei dem Roboterarm kann das Motorgehäuse im Inneren des hohlen ersten Glieds angeordnet sein und zwischen einer Außenseite des Motorgehäuses und einer Innenseite des hohlen ersten Glieds kann dabei ein Zwischenraum gebildet werden, in dem der Ringraum angeordnet ist.

Ein in das Kabelführungsrohr eingelegtes Kabel kann an dem mit dem Getriebe-Ausgangsglied verbundenen zweiten Glied festgelegt sein.

Die erfindungsgemäße technische Lehre ist nicht nur auf Antriebsvorrichtungen begrenzt, sondern kann sich auch bei nicht-angetriebenen Gelenken realisieren, und zwar in Form einer Drehdurchführung, welche ein Kabel beispielsweise über einen Scharnierbereich hinweg führt. In einem solchen Scharnierbereich dreht sich auch ein erstes Bauteil bzw. erstes Glied relativ zu einem zweiten Bauteil bzw. zweitem Glied. Dort stellen sich analoge Aufgaben für die Vermeidung von Torsionen in dem Kabel, wenn es in axialer Richtung durch einen hohlen Zapfen und einer hohlen Drehzapfenaufnahme zu führen ist.

Die Aufgabe wird demgemäß außerdem gelöst durch eine Drehdurchführung für ein Gelenk eines Roboterarms, aufweisend:
- eine hohle Drehzapfenaufnahme,
- ein koaxial in der hohlen Drehzapfenaufnahme drehbar gelagerter hohler Drehzapfen,
- ein mit dem hohler Drehzapfen verbundenes Kabelführungsrohr, welches sich von einem zapfenbasisseitigen Rohrende ausgehend axial durch den hohlen Drehzapfen hindurch bis zu seinem der Zapfenbasis axial gegenüberliegenden zapfenkopfseitigen Rohrende der hohlen Drehzapfenaufnahme erstreckt und dort einen Führungsrohrendabschnitt bildet,
- einen mit dem Führungsrohrendabschnitt des Kabelführungsrohres verbundenen Mitnehmer, der einen mit dem Führungsrohrendabschnitt verbundenen Nabenabschnitt, einen radial nach außen versetzten Kabelführungsabschnitt und einen den Nabenabschnitt mit dem Kabelführungsabschnitt verbindenden Verbindungsabschnitt aufweist,
- einen koaxial zur hohlen Drehzapfenaufnahme angeordneten Ringraum, der ausgebildet ist zur Aufnahme einer Kabelschlaufe eines in den Ringraum eingelegten Kabels, wobei der Ringraum eine Öffnung aufweist, über die das Kabel in den Ringraum zuführbar ist, wobei der Kabelführungsabschnitt des Mitnehmers ausgebildet ist, in einem eingelegten Zustand eines Kabels, in dem das Kabel axial von dem zapfenbasisseitigen Rohrende zum zapfenkopfseitigen Rohrende durch das Kabelführungsrohr hindurchgeführt und radial an den Kabelführungsabschnitt geführt ist, das Kabel bei einer Drehung des hohlen Drehzapfens relativ zur hohlen Drehzapfenaufnahme in einem Übergangsabschnitt des Kabels in die Öffnung des Ringraumes hinein mitzunehmen, derart, dass das Kabel an einer der momentanen Drehstellung des hohlen Drehzapfens relativ zur hohlen Drehzapfenaufnahme entsprechenden Umfangsstelle in den Ringraum hineingeführt wird.

Die im Zusammenhang mit der Antriebsvorrichtung beschriebenen Merkmale, insbesondere im Hinblick auf das Kabelführungsrohr, dem Mitnehmer und dem Ringraum sind bei der Drehdurchführung in analoger Weise anwendbar. Demgemäß gelten die entsprechenden Offenbarungen bei der Antriebsvorrichtung auch für die Drehdurchführung.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, vorteilhafte Merkmale von alternativen Ausführungsvarianten der Erfindung darstellen.

Es zeigen:
- Fig. 1: eine perspektivische Darstellung eines repräsentativen Ausführungsbeispiels eines Roboters, insbesondere eines Leichtbauroboters, der zur Mensch-Roboter-Kollaboration ausgebildet sein kann, umfassend einen Roboterarm mit Gliedern, Gelenken und Antriebsvorrichtungen sowie einer Steuervorrichtung, die ausgebildet und eingerichtet ist, die Antriebsvorrichtungen automatisch anzusteuern, um den Roboterarm zu bewegen,
- Fig. 2: eine perspektivische Teildarstellung eines abgewandelten Roboterarms im Bereich eines Gelenks des Roboterarms, das eine Antriebsvorrichtung umfasst,
- Fig. 3: eine perspektivische Schnittdarstellung einer beispielshaften Ausführungsform einer erfindungsgemäßen Antriebsvorrichtung,
- Fig. 4: eine axiale Schnittdarstellung der beispielshaften Ausführungsform der erfindungsgemäßen Antriebsvorrichtung gemäß Fig. 3 mit einem topfförmig abgewandelten Mitnehmer in einer ersten Ausführungsvariante mit lediglich einer äußeren Topfmantelfläche,
- Fig. 5: eine axiale Schnittdarstellung der beispielshaften Ausführungsform der erfindungsgemäßen Antriebsvorrichtung gemäß Fig. 3 mit einem topfförmig abgewandelten Mitnehmer in einer zweiten Ausführungsvariante mit einer äußeren Topfmantelfläche und einer inneren Topfmantelfläche,
- Fig. 6: eine perspektivische Darstellung der Antriebsvorrichtung gemäß Fig. 3 in einer Ansicht von außen mit einer Ringraumaußenwand eines den Motor umgebenden Ringraumes und einem kreisscheibenförmigen Mitnehmer,
- Fig. 7: eine perspektivische Darstellung der Antriebsvorrichtung gemäß Fig. 6 bei abgenommener Ringraumaußenwand, so dass die im Ringraum gelagerte Kabelschlaufe erkennbar ist,
- Fig. 8: eine perspektivische Darstellung der Antriebsvorrichtung gemäß Fig. 6 mit einer gegenüber dem kreisscheibenförmigen Mitnehmer abgewandelten ersten Ausführungsvariante eines halbkreisförmigen Mitnehmers, und
- Fig. 9: eine perspektivische Darstellung der Antriebsvorrichtung gemäß Fig. 6 mit einer gegenüber dem kreisscheibenförmigen und dem halbkreisförmigen Mitnehmer abgewandelten zweiten Ausführungsvariante eines Mitnehmers als ein Hebel.

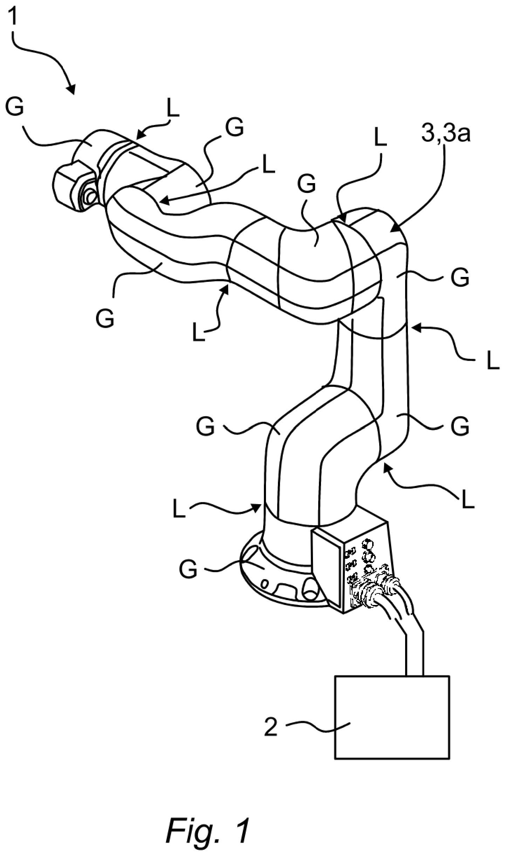

In der Fig. 1 ist ein Roboterarm 3 mit mehreren Gliedern G und die Glieder G gegeneinander verstellbar verbindenden Gelenken L dargestellt, wobei wenigstens eines der Gelenke L eine erfindungsgemäße Antriebsvorrichtung 4 aufweisen kann.

Die Fig. 1 zeigt den Roboterarm 3 in der Art eines Leichtbauroboters 3a mit insgesamt sechs oder sieben Achsen. Dieser Leichtbauroboter 3a ist für eine Mensch-Roboter-Kollaboration besonders gut geeignet. Der Leichtbauroboter 3a kann mittels einer Steuervorrichtung 2 kraft-/momentgeregelt betrieben werden, insbesondere in einer Nachgiebigkeitsregelung. Dieser Leichtbauroboter 3a weist mehrere Glieder G und die Glieder G gegeneinander verstellenden Gelenke L auf, von denen alle Gelenke L jeweils als ein Drehgelenk ausgebildet sind. Insofern verbindet das jeweilige Gelenk L jeweils ein erstes Glied G1 des Roboterarms 3 mit einem unmittelbar benachbarte zweiten Glied G2 des Roboterarms 3 gegeneinander verdrehbar, wobei das entsprechende Drehgelenk eine erfindungsgemäße Antriebsvorrichtung 4 nach einem der beschriebenen Ausführungen aufweisen kann.

Bei dem Roboterarm 3 mit den mehreren Gliedern G und mehreren Gelenken L verbindet jeweils ein Gelenk L zwei in der kinematischen Kette des Roboterarms 3 unmittelbar benachbarte Glieder G gegeneinander verstellbar, mittels automatisch ansteuerbaren Antriebsvorrichtungen 4, von denen jeweils ein Antrieb zum Bewegen jeweils eines Gelenks L der Gelenke L ausgebildet ist, sodass durch automatisch angesteuertes Bewegen der Gelenke L mittels der jeweiligen Antriebsvorrichtung 4 die Glieder G des Roboterarms 3 in eine gewünschte Gelenkskonfiguration einstellbar sind.

Wenigstens eine der Antriebsvorrichtungen 4, insbesondere mehrere oder alle Antriebsvorrichtungen 4 der Gelenke L können als eine Antriebsvorrichtung 4 nach einem der beschriebenen erfindungsgemäßen Ausführungsformen ausgebildet sein.

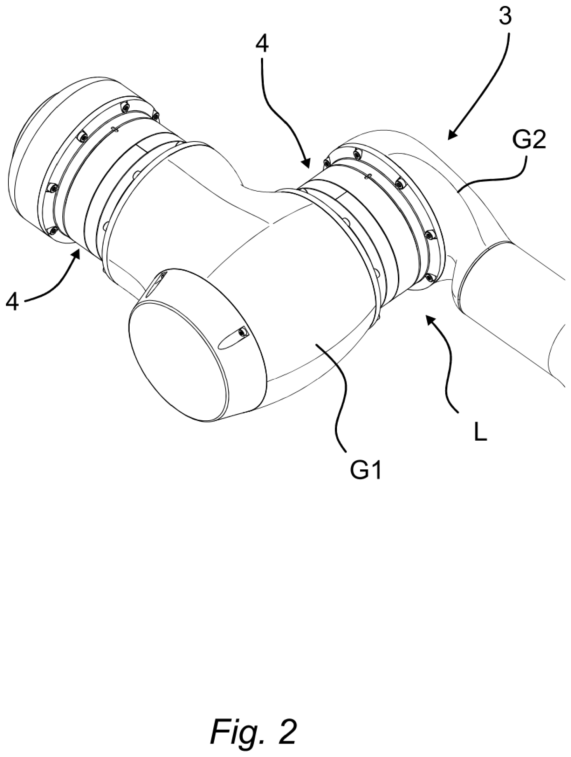

Die Fig. 2 zeigt einen Teilabschnitt des Roboterarms 3, der mehrere Glieder G und mehrere, die Glieder G gegeneinander verstellbar verbindende Gelenke L aufweist, von denen wenigstens ein Gelenk L als ein Drehgelenk ausgebildet ist, das ein Antriebsvorrichtung 4 nach einem der beschriebenen Ausführungen aufweist.

Wahlweise können alle Gelenke des Roboterarms 3 mit jeweils einer Antriebsvorrichtung 4 nach einem der beschriebenen Ausführungen ausgestattet sein, oder es können nur eine Teilanzahl der Gelenke L mit einer Antriebsvorrichtung 4 nach einem der beschriebenen Ausführungen ausgestattet sein. In einer einfachen Ausführung kann der Roboterarm 3 gegebenenfalls auch nur ein einziges Gelenk L aufweisen, das mit einer Antriebsvorrichtung 4 nach einem der beschriebenen Ausführungen ausgestattet ist, wobei dann die übrigen Gelenke L des Roboterarms 3 mit konventionellen Antrieben versehen sein können.

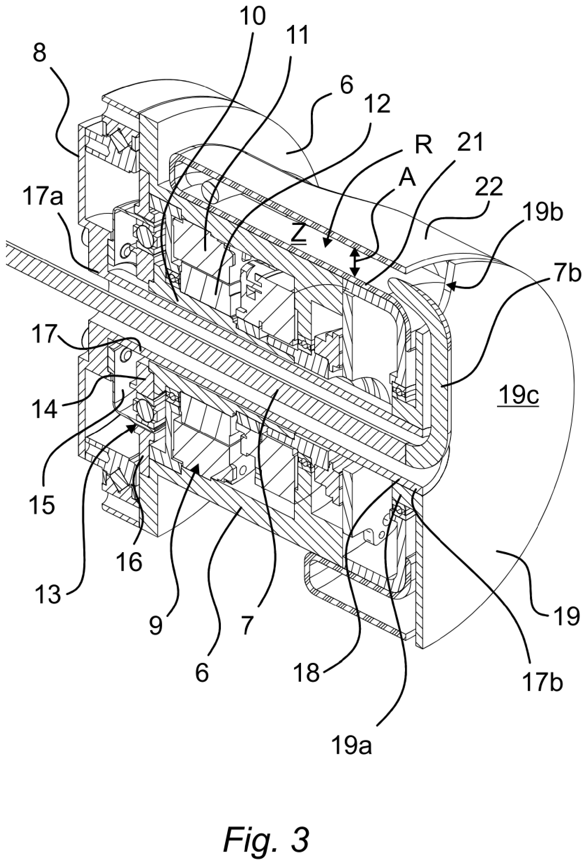

Das die Antriebsvorrichtung 4 nach einem der beschriebenen Ausführungen aufweisende Gelenk L des Roboterarms 3 kann ein hohles erstes Glied G1 und ein mit dem hohlen ersten Glied G1 unmittelbar drehbar verbundenes zweites Glied G2 aufweisen, wobei ein Motorgehäuse 6 der Antriebsvorrichtung 4 zumindest teilweise oder vollständig im Inneren des hohlen ersten Glieds G1 angeordnet sein kann und ein zwischen einer Außenseite des Motorgehäuses 6 und einer Innenseite des hohlen ersten Glieds G1 ein Zwischenraum Z gebildet wird, in dem der Ringraum R angeordnet ist, wie dies beispielsweise in Fig. 3 aufgezeigt ist.

Ein eingelegtes Kabel 7 kann beispielsweise an dem mit einem Getriebe-Ausgangsglied 15 der Antriebsvorrichtung 4 verbundenen zweiten Glied G2 festgelegt sein.

Die in Fig. 3 bis Fig. 9 dargestellte beispielshafte, erfindungsgemäße Antriebsvorrichtung 4 für eines der Gelenke L des Roboterarms 3 weist einen Motor 9 mit dem Motorgehäuse 6 und einer im Motorgehäuse 6 drehbar gelagerten hohlen Motorwelle 10 auf. Der Motor 9 kann einen mit dem Motorgehäuse 6 verbundenen Stator 11 und einen darin laufenden Rotor 12 aufweisen. Der Rotor 12 ist mit der hohlen Motorwelle 10 verbunden.

Die Antriebsvorrichtung 4 weist außerdem ein koaxial zur Motorwelle 10 angeordnetes Getriebe 13 auf, das ein an die Motorwelle 10 angekoppeltes hohles Getriebe-Eingangsglied 14, ein hohles Getriebe-Ausgangsglied 15, sowie ein das Getriebe-Eingangsglied 14 mit dem Getriebe-Ausgangsglied 15 koppelndes Abstütz-Glied 16 auf.

Wie insbesondere in Fig. 3 erkennbar ist, ist im Falle der vorliegenden Ausführungsbeispiele das Getriebe 13 als ein Spannungswellengetriebe ausgebildet.

Bei diesem Spannungswellengetriebe bildet der Wellengenerator das antriebsseitige Getriebe-Eingangsglied 14 und die Abtriebsbüchse (Flexspline) bildet das abtriebsseitige Getriebe-Ausgangsglied 15. Dabei bildet der innenverzahnte Außenring (Circular Spline) des Spannungswellengetriebes das Abstütz-Glied 16, welches mit dem Motorgehäuse 6 verbunden ist.

Die Antriebsvorrichtung 4 umfasst außerdem ein mit dem Getriebe-Ausgangsglied 15 verbundenes Kabelführungsrohr 17, welches sich von seinem getriebeseitigen Rohrende 17a ausgehend vom Getriebe-Ausgangsglied 15 axial durch die hohle Motorwelle 10 hindurch bis zu seinem dem Getriebe 13 axial gegenüberliegenden motorrückseitigen Rohrende 17b des Motorgehäuses 6 erstreckt und dort einen Führungsrohrendabschnitt 18 bildet.

Die Antriebsvorrichtung 4 weist einen mit dem Führungsrohrendabschnitt 18 des Kabelführungsrohres 17 verbundenen Mitnehmer 19 auf, der einen mit dem Führungsrohrendabschnitt 18 verbundenen Nabenabschnitt 19a, einen radial nach außen versetzten Kabelführungsabschnitt 19b und einen den Nabenabschnitt 19a mit dem Kabelführungsabschnitt 19b verbindenden Verbindungsabschnitt 19c aufweist.

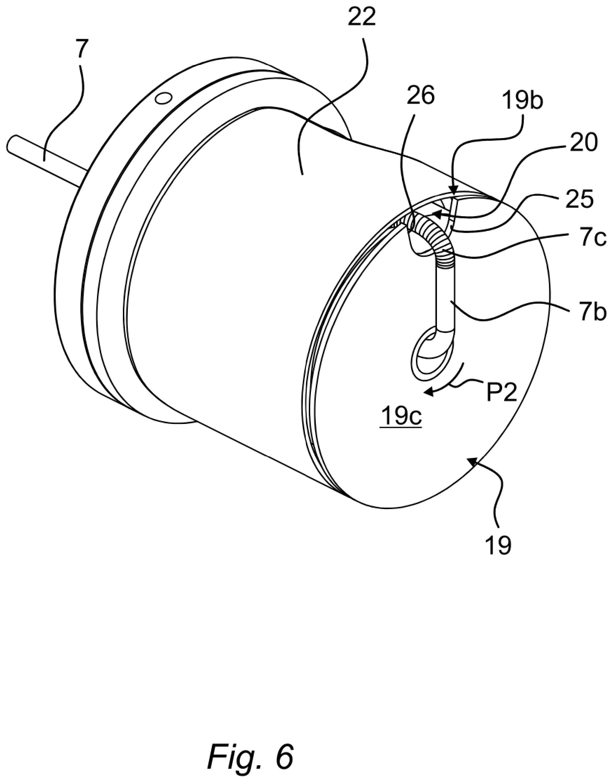

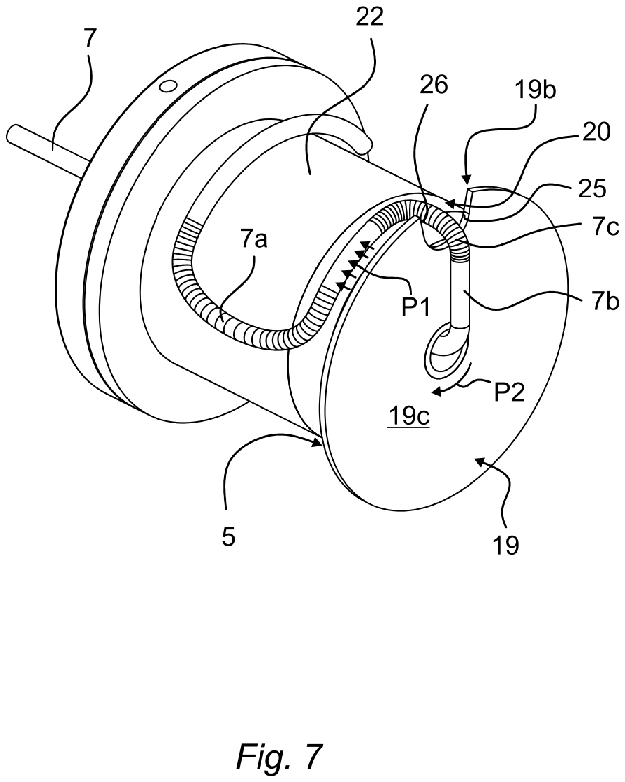

Die Antriebsvorrichtung 4 weist darüber hinaus einen koaxial zum Motor 9 angeordneten Ringraum R auf, der ausgebildet ist zur Aufnahme einer Kabelschlaufe 7a eines in den Ringraum R eingelegten Kabels 7, wie dies insbesondere in Fig. 7 aufgezeigt ist. Der Ringraum R weist eine Öffnung 20 (Fig. 6) auf, über die das Kabel 7 in den Ringraum R zuführbar ist, wobei der Kabelführungsabschnitt 19b des Mitnehmers 19 ausgebildet ist, in einem eingelegten Zustand des Kabels 7, in dem das Kabel 7 axial von dem getriebeseitigen Rohrende 17a zum motorrückseitigen Rohrende 17b durch das Kabelführungsrohr 17 hindurchgeführt und radial über einen Kabelradialabschnitt 7b an den Kabelführungsabschnitt 19b geführt ist, das Kabel 7 bei einer Drehung des Getriebe-Ausgangsglieds 15 in einem Übergangsabschnitt 7c des Kabels 7 in die Öffnung 20 des Ringraumes R hinein mitzunehmen, derart, dass das Kabel 7 an einer der momentanen Drehstellung des Getriebe-Ausgangsglieds 15 entsprechenden Umfangsstelle in den Ringraum R hineingeführt wird.

Der Ringraum R weist eine das Motorgehäuse 6 umfangsseitig einfassende Ringrauminnenwand 21 und eine in einem radialen Abstand A von der Ringrauminnenwand 21 angeordnete, die Ringrauminnenwand 21 umfangsseitig umgebende Ringraumaußenwand 22 auf, wobei zwischen der Ringrauminnenwand 21 und der Ringraumaußenwand 22 ein Lagerraum für die Kabelschlaufe 7a des durch den Ringraum R geleiteten Kabels 7 gebildet wird und die Öffnung 20 des Ringraums R auf demselben Umfang liegt wie der Kabelführungsabschnitt 19b des Mitnehmers 19.

Der Verbindungsabschnitt 19c des Mitnehmers 19 kann gemäß einer grundlegenden Ausführungsform, wie sie in Fig. 6 und Fig. 7 aufgezeigt ist, von einer sich radial von dem Nabenabschnitt 19a zu dem Kabelführungsabschnitt 19b erstreckenden Ringscheibe gebildet werden.

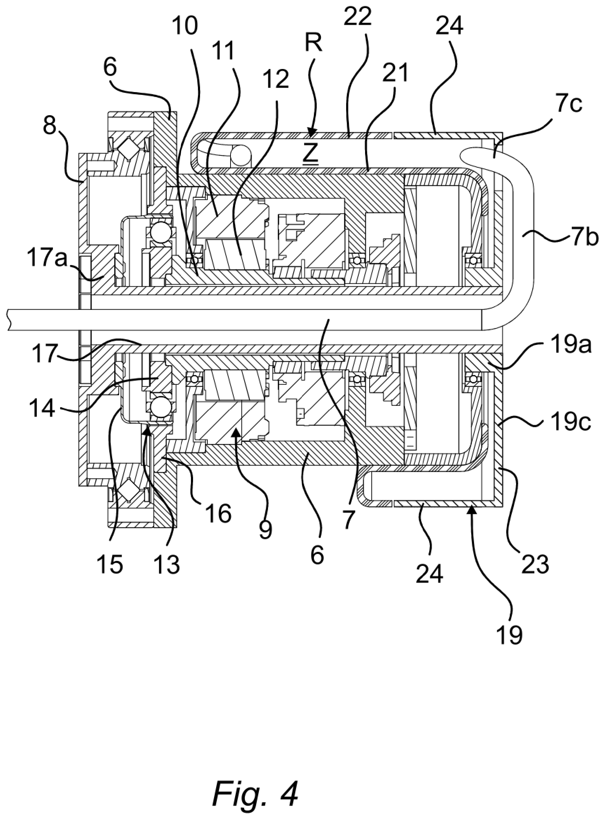

Der Mitnehmer 19 kann alternativ auch topfförmig ausgebildet sein, wie dies beispielsweise in der Schnittdarstellung der Fig. 4 dargestellt ist, wobei der als Ringscheibe ausgebildete Verbindungsabschnitt 19c von einer Topfbodenfläche 23 des topfförmigen Mitnehmers 19 gebildet wird und eine Topfmantelfläche 24 des topfförmigen Mitnehmers 19 zumindest axial abschnittsweise oder vollständig die Ringraumaußenwand 22 des Ringraums R bildet.

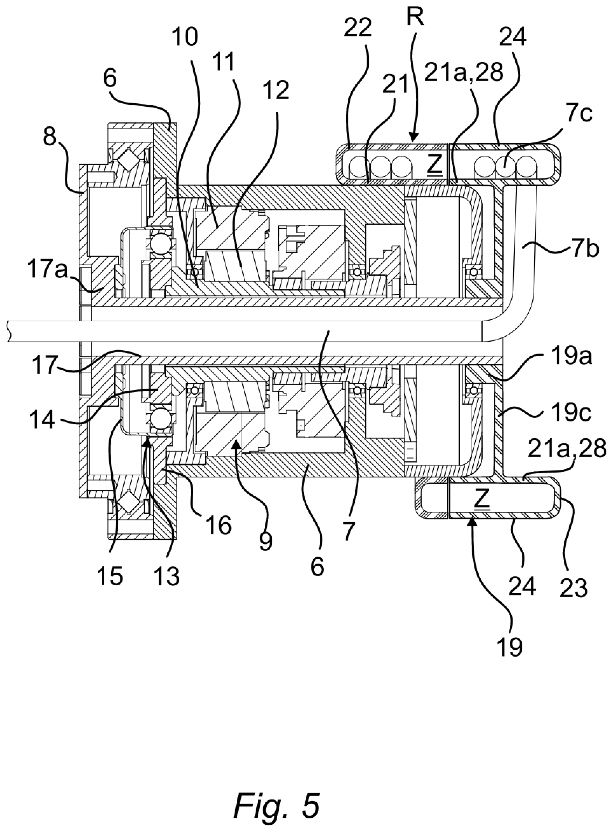

Der topfförmig Mitnehmer 19 kann in einer anderen Variante, wie diese beispielsweise in der Schnittdarstellung der Fig. 5 dargestellt ist, zwei Topfmantelflächen aufweisen, und zwar eine äußere Topfmantelfläche 24 und eine innere Topfmantelfläche 28.

Demgemäß kann die dem Mitnehmer 19 zugewandte Hälfte der Kabelschlaufe 7a zwischen zwei koaxial zueinander beabstandet angeordneten Topfmantelflächen 24 und 28 des topfförmigen Mitnehmers 19 eingeschlossen sein. Die von einer inneren Topfmantelfläche 28 gebildete Ringrauminnenwand 21a ist dabei zumindest in einen geringfügigen Abstand zum Motorgehäuse 6 gelagert. Somit kann die von der inneren Topfmantelfläche 28 gebildete Ringrauminnenwand 21a eine relative Bewegung zum Motorgehäuse 6 ausführen. Die inneren Topfmantelfläche 28 ist in dieser Ausführungsvariante gemäß Fig. 5 dann auch kein Teil des Motorgehäuses 6. In dieser Variante gemäß Fig. 5 umgibt der Ringraum R das Motorgehäuse 6 auch nicht vollständig, sondern ist teilweise axial über das rückseitige Stirnende des Motorgehäuses 6 hinaus versetzt angeordnet. Die Kabelschlaufe 7c mündet dabei alternativ auch nicht axial stirnseitig in den Ringraum R, sondern radial von unten durch die innere Topfmantelfläche 28.

In der Fig. 7 ist dargestellt, wie eine dem Ringraum R zugewandte Innenwand 5 des als Ringscheibe ausgebildeten Verbindungsabschnitts 19c des Mitnehmers 19 eine axiale Ringstirnwand des Ringraums R bilden kann, an der eine in dem Ringraum R ausgebildete Kabelschlaufe 7a des Kabels 7 axial, d.h. in Pfeilrichtung P1 geführt sein kann.

Der Kabelführungsabschnitt 19b weist eine radial ausgerichtete, in Drehrichtung P2 des Mitnehmers 19 voreilende Führungswand 25 und eine radial ausgerichtete, in Drehrichtung P2 des Mitnehmers 19 nacheilende Führungswand 26 auf, wobei die beiden Führungswände 25, 26 derart beabstandet zueinander angeordnet sind, dass ein eingelegtes Kabel 7 von zwei gegenüberliegende Seiten geführt ist.

Die Fig. 3 bis Fig. 9 zeigen die Antriebsvorrichtung 4 mit einem in das Kabelführungsrohr 17 eingelegten Kabel 7, das an dem Getriebe-Ausgangsglied 15 oder an einem mit dem Getriebe-Ausgangsglied 15 verbundenen Bauteil 8 befestigt ist, wobei das Kabel 7an dem motorrückseitigen Rohrende 17b axial aus dem Kabelführungsrohr 17 herausgeführt und in radialer Richtung als Kabelradialabschnitt 7b zum Kabelführungsabschnitt 19b geführt ist, wo es in seinem Übergangsabschnitt 7c in den Ringraum R eintritt und darin die Kabelschlaufe 7a bildet, wie dies insbesondere in Fig. 7 deutlich dargestellt ist.

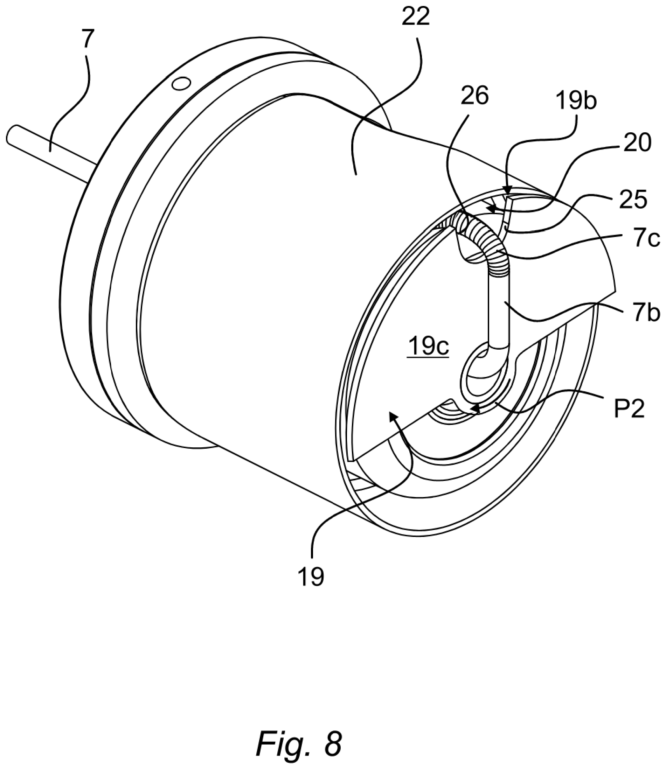

Die Fig. 8 zeigt eine perspektivische Darstellung der Antriebsvorrichtung 4 gemäß Fig. 6 mit einer gegenüber dem kreisscheibenförmigen Mitnehmer 19 abgewandelten ersten Ausführungsvariante eines halbkreisförmigen Mitnehmers 19. In dieser ersten Ausführungsvariante wird der Verbindungsabschnitt 19c des Mitnehmers 19 von einer sich radial von dem Nabenabschnitt 19a zu dem Kabelführungsabschnitt 19b erstreckenden Ringscheibensegment mit einem Segmentwinkel von beispielhaften 180 Grad gebildet. Es sind aber auch andere Segmentwinkel, wie beispielsweise 90 Grad oder 270 Grad, bzw. sonstige dazwischenliegende Winkelbeträge denkbar und möglich.

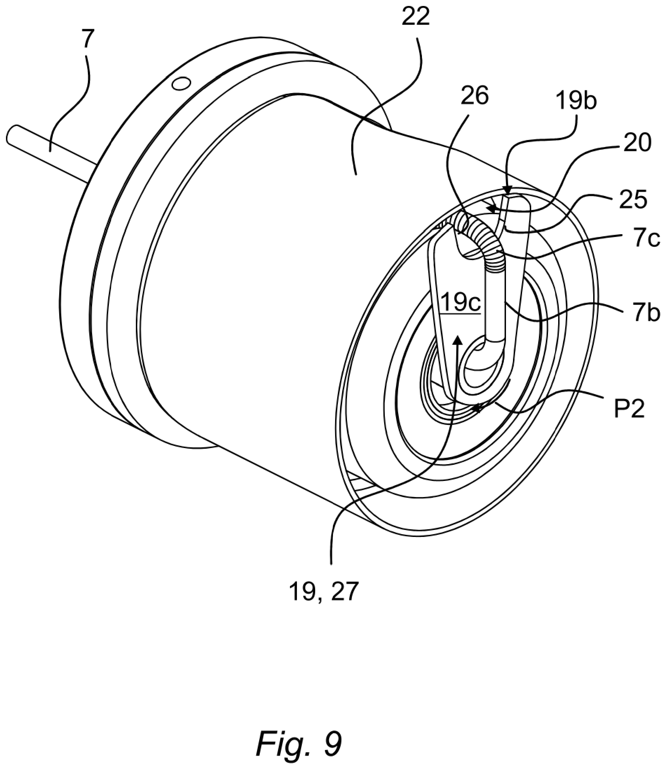

Die Fig. 9 zeigt eine perspektivische Darstellung der Antriebsvorrichtung gemäß Fig. 6 mit einer gegenüber dem kreisscheibenförmigen und dem halbkreisförmigen Mitnehmer 19 abgewandelten zweiten Ausführungsvariante eines Mitnehmers 19 als ein Hebel 27.

In dieser zweiten Ausführungsvariante wird der Verbindungsabschnitt 19c des Mitnehmers 19 von einem sich radial von dem Nabenabschnitt 19a zu dem Kabelführungsabschnitt 19b erstreckenden Hebel 27 gebildet.

## Patentansprüche

1. Antriebsvorrichtung (4) für ein Gelenk (L) eines Roboterarms (3), aufweisend:
- einen Motor (9) mit einem Motorgehäuse (6) und einer im Motorgehäuse (6) drehbar gelagerten hohlen Motorwelle (10),
- ein koaxial zur Motorwelle (10) angeordnetes Getriebe (13), das ein an die Motorwelle (10) angekoppeltes hohles Getriebe-Eingangsglied (14), ein hohles Getriebe-Ausgangsglied (15), sowie ein das Getriebe-Eingangsglied (14) mit dem Getriebe-Ausgangsglied (15) koppelndes Abstütz-Glied (16) aufweist,
- ein mit dem Getriebe-Ausgangsglied (15) verbundenes Kabelführungsrohr (17), welches sich von seinem getriebeseitigen Rohrende (17a) ausgehend vom Getriebe-Ausgangsglied (15) axial durch die hohle Motorwelle (10) hindurch bis zu seinem dem Getriebe (13) axial gegenüberliegenden motorrückseitigen Rohrende (17b) des Motorgehäuses (6) erstreckt und dort einen Führungsrohrendabschnitt (18) bildet,
- einen mit dem Führungsrohrendabschnitt (18) des Kabelführungsrohres (17) verbundenen Mitnehmer (19), der einen mit dem Führungsrohrendabschnitt (18) verbundenen Nabenabschnitt (19a), einen radial nach außen versetzten Kabelführungsabschnitt (19b) und einen den Nabenabschnitt (19a) mit dem Kabelführungsabschnitt (19b) verbindenden Verbindungsabschnitt (19c) aufweist,
- einen koaxial zum Motor (9) angeordneten Ringraum (R), der ausgebildet ist zur Aufnahme einer Kabelschlaufe (7a) eines in den Ringraum (R) eingelegten Kabels (7), wobei der Ringraum (R) eine Öffnung (20) aufweist, über die das Kabel (7) in den Ringraum (R) zuführbar ist, wobei der Kabelführungsabschnitt (19b) des Mitnehmers (19) ausgebildet ist, in einem eingelegten Zustand eines Kabels (7), in dem das Kabel (7) axial von dem getriebeseitigen Rohrende (17a) zum motorrückseitigen Rohrende (17b) durch das Kabelführungsrohr (17) hindurchgeführt und radial an den Kabelführungsabschnitt (19b) geführt ist, das Kabel (7) bei einer Drehung des Getriebe-Ausgangsglieds (15) in einem Übergangsabschnitt (7c) des Kabels (7) in die Öffnung (20) des Ringraumes (R) hinein mitzunehmen, derart, dass das Kabel (7) an einer der momentanen Drehstellung des Getriebe-Ausgangsglieds (15) entsprechenden Umfangsstelle in den Ringraum (R) hineingeführt wird.

2. Antriebsvorrichtung (4) nach Anspruch 1, **dadurch gekennzeichnet, dass** der Ringraum (R) eine das Motorgehäuse (6) umfangsseitig einfassende Ringrauminnenwand (21) und eine in einem radialen Abstand (A) von der Ringrauminnenwand (21) angeordnete, die Ringrauminnenwand (21) umfangsseitig umgebende Ringraumaußenwand (22) aufweist, wobei zwischen der Ringrauminnenwand (21) und der Ringraumaußenwand (22) ein Lagerraum für eine Kabelschlaufe (7a) eines durch den Ringraum (R) geleiteten Kabels (7) gebildet wird und die Öffnung (20) des Ringraums (R) auf demselben Umfang liegt wie der Kabelführungsabschnitt (19b) des Mitnehmers (19).

3. Antriebsvorrichtung (4) nach Anspruch 1 oder 2, **dadurch gekennzeichnet, dass** der Verbindungsabschnitt (19c) des Mitnehmers (19) von einem sich radial von dem Nabenabschnitt (19a) zu dem Kabelführungsabschnitt (19b) erstreckenden Hebel (27) gebildet wird.

4. Antriebsvorrichtung (4) nach Anspruch 1 oder 2, **dadurch gekennzeichnet, dass** der Verbindungsabschnitt (19c) des Mitnehmers (19) von einer sich radial von dem Nabenabschnitt (19a) zu dem Kabelführungsabschnitt (19b) erstreckenden Ringscheibe oder einem Ringscheibensegment gebildet wird.

5. Antriebsvorrichtung (4) nach Anspruch 4, **dadurch gekennzeichnet, dass** der Mitnehmer (19) topfförmig ausgebildet ist, wobei der als Ringscheibe ausgebildete Verbindungsabschnitt (19c) von einer Topfbodenfläche (23) des topfförmigen Mitnehmers (19) gebildet wird und wenigstens eine Topfmantelfläche (24) des topfförmigen Mitnehmers (19) axial zumindest abschnittsweise oder vollständig die Ringraumaußenwand (22) und/oder die Ringrauminnenwand (21) des Ringraums (R) bildet.

6. Antriebsvorrichtung (4) nach Anspruch 4 oder 5, **dadurch gekennzeichnet, dass** eine dem Ringraum (R) zugewandte Innenwand (5) des als Ringscheibe ausgebildeten Verbindungsabschnitts (19c) des Mitnehmers (19) eine axiale Ringstirnwand des Ringraums (R) bildet, an der eine in dem Ringraum (R) ausgebildete Kabelschlaufe (7c) axial geführt ist.

7. Antriebsvorrichtung (4) nach einem der Ansprüche 1 bis 6, **dadurch gekennzeichnet, dass** der Kabelführungsabschnitt (19b) eine radial ausgerichtete, in Drehrichtung (P2) des Mitnehmers (19) voreilende Führungswand (25) und eine radial ausgerichtete, in Drehrichtung (P2) des Mitnehmers (19) nacheilende Führungswand (26) aufweist, wobei die beiden Führungswände (25, 26) derart beabstandet zueinander angeordnet sind, dass ein eingelegtes Kabel (7) von zwei gegenüberliegende Seiten geführt ist.

8. Antriebsvorrichtung (4) nach einem der Ansprüche 1 bis 7, aufweisend ein in das Kabelführungsrohr (17) eingelegtes Kabel (7), das an dem Getriebe-Ausgangsglied (15) oder an einem mit dem Getriebe-Ausgangsglied (15) verbundenen Bauteil (8) befestigt ist, und das an dem motorrückseitigen Rohrende (17b) axial aus dem Kabelführungsrohr (17) herausgeführt und in radialer Richtung zum Kabelführungsabschnitt (19b) geführt ist, wo es in den Ringraum (R) eintritt und darin eine Kabelschlaufe (7c) bildet.

9. Roboterarm (3) mit mehreren Gliedern (G) und die Glieder (G) gegeneinander verstellbar verbindenden Gelenken (L), wobei wenigstens eines der Gelenke (L) eine Antriebsvorrichtung (4) nach einem der Ansprüche 1 bis 8 aufweist.

10. Roboterarm (3) nach Anspruch 9, **dadurch gekennzeichnet, dass** das die Antriebsvorrichtung (4) nach einem der Ansprüche 1 bis 8 aufweisende Gelenk (L) des Roboterarms (3) ein hohles erstes Glied (G1) und ein mit dem hohlen ersten Glied (G1) unmittelbar drehbar verbundenes zweites Glied (G2) aufweist, wobei das Motorgehäuse (6) im Inneren des hohlen ersten Glieds (G1) angeordnet ist und ein zwischen einer Außenseite des Motorgehäuses (6) und einer Innenseite des hohlen ersten Glieds (G1) ein Zwischenraum gebildet wird, in dem der Ringraum (R) angeordnet ist.

11. Roboterarm (3) nach Anspruch 10, **dadurch gekennzeichnet, dass** ein in das Kabelführungsrohr (17) eingelegtes Kabel (7) an dem mit dem Getriebe-Ausgangsglied (15) verbundenen zweiten Glied (G2) festgelegt ist.

12. Drehdurchführung für ein Gelenk (L) eines Roboterarms (3), aufweisend:
- eine hohle Drehzapfenaufnahme,
- ein koaxial in der hohlen Drehzapfenaufnahme drehbar gelagerter hohler Drehzapfen,
- ein mit dem hohler Drehzapfen verbundenes Kabelführungsrohr (17), welches sich von einem zapfenbasisseitigen Rohrende ausgehend axial durch den hohlen Drehzapfen hindurch bis zu seinem der Zapfenbasis axial gegenüberliegenden zapfenkopfseitigen Rohrende der hohlen Drehzapfenaufnahme erstreckt und dort einen Führungsrohrendabschnitt (18) bildet,
- einen mit dem Führungsrohrendabschnitt (18) des Kabelführungsrohres (17) verbundenen Mitnehmer (19), der einen mit dem Führungsrohrendabschnitt (18) verbundenen Nabenabschnitt (19a), einen radial nach außen versetzten Kabelführungsabschnitt (19b) und einen den Nabenabschnitt (19a) mit dem Kabelführungsabschnitt (19b) verbindenden Verbindungsabschnitt (19c) aufweist,
- einen koaxial zur hohlen Drehzapfenaufnahme angeordneten Ringraum (R), der ausgebildet ist zur Aufnahme einer Kabelschlaufe (7c) eines in den Ringraum (R) eingelegten Kabels (7), wobei der Ringraum (R) eine Öffnung (20) aufweist, über die das Kabel (7) in den Ringraum (R) zuführbar ist, wobei der Kabelführungsabschnitt (19b) des Mitnehmers (19) ausgebildet ist, in einem eingelegten Zustand eines Kabels (7), in dem das Kabel (7) axial von dem zapfenbasisseitigen Rohrende zum zapfenkopfseitigen Rohrende durch das Kabelführungsrohr (17) hindurchgeführt und radial an den Kabelführungsabschnitt (19b) geführt ist, das Kabel (7) bei einer Drehung des hohlen Drehzapfens relativ zur hohlen Drehzapfenaufnahme in einem Übergangsabschnitt (7c) des Kabels (7) in die Öffnung (20) des Ringraumes (R) hinein mitzunehmen, derart, dass das Kabel (7) an einer der momentanen Drehstellung des hohlen Drehzapfens relativ zur hohlen Drehzapfenaufnahme entsprechenden Umfangsstelle in den Ringraum (R) hineingeführt wird.
